(19) Europäisches Patentamt
European Patent Office
Office européen des brevets

(11) **EP 1 201 288 B1**

(12) **EUROPEAN PATENT SPECIFICATION**

(45) Date of publication and mention
of the grant of the patent:
**25.04.2007   Bulletin 2007/17**

(51) Int Cl.:
***B01D 37/02*** *(2006.01)*      ***C12H 1/04*** *(2006.01)*

(21) Application number: **00870258.1**

(22) Date of filing: **31.10.2000**

(54) **Filter aid for the filtration of beer**

Filterhilfsmittel für die Bierfiltration

Aide de filtration pour la bière

(84) Designated Contracting States:
**AT BE CH CY DE DK ES FI FR GB GR IE IT LI LU MC NL PT SE**

(43) Date of publication of application:
**02.05.2002   Bulletin 2002/18**

(73) Proprietor: **UNIVERSITE CATHOLIQUE DE LOUVAIN**
**1348 Louvain la Neuve (BE)**

(72) Inventors:
• **Biebuyck,Jean-Jacques**
  **1330 Rixensart (BE)**
• **Daoust, Daniel**
  **1325 Chaumont-Gistoux (BE)**

• **Devaux, Jacques**
  **5001 Belgrade (Namur) (BE)**
• **Rahier, Georges**
  **4000 Liège (BE)**

(74) Representative: **Brants, Johan P.E. et al**
**De Clercq, Brants & Partners cv**
**Edgard Gevaertdreef 10a**
**9830 Sint-Martens-Latem (BE)**

(56) References cited:
**EP-A- 0 483 099**      **WO-A-01/88082**
**WO-A-96/17923**      **CH-A- 407 950**
**DE-A- 4 125 594**      **FR-A- 2 733 920**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a filter aid for filtering beer.

In the processing of beer, filtration is a final step in their production.

The object of filtration is to remove all yeasts and colloidal particles in suspension in beer at the end of storage, ensuring a stable clarity in the final product. Filtration must take place at low temperature, if possible at -1°C, with a dissolved oxygen concentration less than 0.1 mg/l. Laminar flow should be ensured at the inlet and outlet of the filter and the adjustment of the $CO_2$ level in the beer should be performed at the outlet of the filter. The factors that affect filtration are particle size, diffusion, ionic charge, solubility, density, surface activity, etc. The size of particles in beer at the end of maturation is between 0.1 $\mu$m and a few $\mu$m, sometimes even larger. The quality of the filtered product should be optimal with regard to flavour, foam, brilliance, colour and absence of microorganisms.

Extended lagering periods and the addition of flocculation aids both greatly reduce yeast and haze loadings. A final beer filtration is needed to remove residual yeast, other turbidity-causing materials in order to achieve colloidal and microbiological stability.

If there is a significant quantity of suspended material to be removed, powder filters using diatomaceous earth or perlite are employed. Although powder filters can produce beer of acceptable brilliance after a single filtration, a two-stage filtration process is needed for a final polish. Polish filtration may employ a sheet filter.

There are several types of powder filters : the plate and frame, the horizontal leaf, the vertical leaf, and the candle filter.

Yeast, protein, and carbohydrate particles must be removed from the beer to achieve the necessary clarity. As the first step in filtration, powder filters are used in conjunction with a filter aid for removing these suspended particles. The filter aid is generally injected at the point where the beer stream, together with the yeast and other suspended solids, forms an incompressible mass referred to as the "filter-cake." The porous bed creates a surface that traps suspended solids, removing them from the beer. Filter aid, also referred to as "body-feed," is continually added into the flow of beer to maintain the permeability of the cake. Not all of the particles will be trapped at the surface; some, especially the finer material, will pass into the filter cake and be trapped - a process referred to as "depth filtration." Depth filtration is not as effective as surface filtration, but is still a significant mechanism of filtration by filter aids. Powder filtration is generally regarded as providing the most economical form of filtration. The cost of filter aids is quite low, and long filtration cycles at high flow rates are possible.

To achieve beer stability it is necessary to remove either the protein, the polyphenol, or both from the beer. These nonbiological haze precursors can be removed during the cold conditioning or filtration steps, i.e., during colloidal stabilization at the filter. During filtration, the most commonly used stabilizers for removing proteins is amorphous silica gel (e.g., Lucite® ). Polyvinylpolypyrrolidone or PVPP (e.g., Polycar AT®) is typically used for removing polyphenols.

Incorporating stabilization treatments into the filtration process is increasingly popular. The most commonly used stabilizers are silica gels and PVPP. This is achieved by dosing with either a silica gel or PVPP during filtration. The contact time required for optimal performance is very important. To use stabilizers properly, you might have to install a buffer/surge tank and auxiliary dosing equipment.

Silica gel contact times run from three minutes (xerogels) to 20 minutes (hydrogels). It is important to also take into consideration the stabilizer particle size in relation to cake volume occupied within the filter bed.

PVPP can be used in a manner similar to silica gels. In larger breweries PVPP can be recovered and regenerated with caustic for reuse in filtration.

There are several types of depth filters available.

Pulp/Mass Filter: This type of filter was originally built by Enzinger in 1892. Round cakes (50 to 55 centimeters diameter, 5 tot 6 centimeters thick) of cellulose, asbestos, or a combination thereof are placed between frames. Beer is passed through the filter two to three times. The spent mass is removed, washed, and pressed into a new cake for reuse. These filters are labor intensive and not used very often (the exception being Coors Brewing Co. in Golden, Colo.).

Sheet Filters : In 1930 the Seitz company designed the EK (for entkeimung, a German word meaning sterilizing) filters allowing for microorganism-free filtered beer. These were cellulose and asbestos sheets 4.5 to 5 millimeters thick with varying pore sizes. Today asbestos is prohibited and stabilizers such as silica gels, PVPP and perlite have been incorporated. The smaller the pores of the filter sheets, the lower the rate of flow. It is up to the brewer to select the sheet depending on the beer composition. This filter commonly is used as a secondary filter after primary powder infiltration.

Powder Filters : The filter employs the dosing of powders (kieselguhr, or perlite) of varying size onto a support medium (cotton, cloth, plastic cloth, metal screens, or cylindrical metal candles) to form a filter bed. The three main filter types, plate-and-frame, candle and leaf filters.

At the end of the fermentation-maturation, the processed beer comprises a large quantity of yeast in a size between 6 and 9 $\mu$m, and a colloidal haze having a size less than 1,5 $\mu$m. In order to obtain a clarified beer of a good quality, it is sufficient to eliminate particles which are larger than 0,5 $\mu$m.

Such a clarifying filtration necessitates the use of filter aids such as the above mentioned kieselguhrs. These granular substances are essentially composed out of $SiO_2$ and they form during filtration a porous environment which is able in fixating these impurities to be eliminated and facilitates the outstream of the liquid phase. In modern installations these operations are performed in the above mentioned filtration device. These filtrating media are made of inoxidable material having a opening near 50-80 $\mu$m. Filtration is preferably performed with a constant flow rate.

Throughout the text flotation velocity is used. Some technical publications define the flotation velocity also as the terminal climbing velocity.

A first step in such a filtration consists in depositing on these filtrating media a precoat layer in general 2 to 3 mm thick which as formed by the filtration of a suspension of kieselguhr having a flow rate close to about 10 hl/h m$^2$. The permeability of this cake is within a magnitude of $10^{-12}$ m$^2$. Said precoating is suitable for controlling the size of the meshes of the filtrating media and will favorise a detachment of the sediment cake after the filtration cycle. In a next step a second precoating is performed following a similar procedure as the one described above, for the first precoating having also a comparable thickness. Said second precoat has a permeability which is slightly less in a range of 0.02 to 0.3 $10^{-12}$ m$^2$. Said second precoating step results in a fixation of the very fine particles of a size of about 1 $\mu$m. Generally the kind of filter aid which is used during the second precoating is identical to the one used in alluviation.

The third step is a clarifying filtration, which is a step wherein the beer is at the latest stage of the maturation and is intimately mixed with kieselguhr prior filtration of the suspension.

The quality of the deposition of the precoating is of an extreme importance for the macrobiological quality and the turbidity of the beer. In order to assure a good settling of the filtration media it is preferred that D99.5 of the filter aid has a size which is superior to one third of the mesh opening. For minimizing the segregation effect of the particles it is convenient to control the ratio of the velocity of the liquid phase and the velocity of the sedimentation. This ratio must be superior to 2.5. This later criteria is very difficult to obtain when filtering using kieselguhr having a specific mass of 2400 kg/m$^3$ and more.

As a remedy to this complex situation, EP-A-0246241 discloses the use of fiber in particular of cellulose however the use of cellulose fibers results in an inconvenience that cakes are formed whereof the porosity decreases when the pressure increases which is a serious inconvenience for the clarification process.

The invention is directed towards a filter aid wherein the above mentioned problems are not present or at least minimalized. A further object of the invention is to obtain a high quality of the final product in relation to the yeast content and the turbidity, being an economic feasible and environmental compatible system.

FR-A-2733920 discloses regeneratable filtration adjuvants for filtration of liquids, comprising incompressible synthetic or natural polymer grains or incompressible natural grains.

WO-A-01/88082 discloses a process of removing off-flavors and off-odors, such as caused by TCA, from food or beverage products by contacting the food or beverage with one or more aliphatic synthetic polymers.

Another object of the invention is to provide a filter aid which in use in a filtration device covers the filtrating surface in a homogeneous way, and this at the start up to the end of the filtration.

The invention provides therefor a filter aid for filtering beer, in a filtration device working on a defined filtration velocity, said filter aid consists essentially of particles of a material A, whereby the flotation velocity of said particles is smaller than or equal to said filtration velocity. When said criteria are present no segregation occurs and the defined filter surface, for example candles, are covered homogeneously.

The filter aid according to the invention has a specific mass which is less than 1000 kg/m$^3$. The invention relates to a filter aid made from a material A which is chosen from the group:

- Polyethylene, for instance:

| | |
|---|---|
| Low Density Polyethylene | (LDPE), |
| Medium Density Polyethylene | (MDPE), |
| High Density Polyethylene | (HDPE), |
| Linear Low Polyethylene | (LLDPE), |
| Ultra High Molecular Weight Polyethylene | (UHMWPE); |

- Polybutene;
- Polymethylpentene;
- Ethylene copolymers such as copolymers with vinyl acetate, copolymers with vinyl alcohol;
- Binary copolymers and terpolymers with acrylics;
- Olefinic thermoplastic elastomers.

Most preferred materials A have a specific mass within 1 000 - 800 kg/m$^3$.

In another preferred embodiment a filter aid according to the invention is provided wherein the shape factor of the particle, measured with microscopy means, defined by the ratio between the smallest and the largest diameter sizes is on average between 0,4 and 0,8 and preferably close to 0,6.

In another preferred embodiment a filter aid is provided wherein the particles form a granular medium or cake having a porosity of between 0,4 and 0,6 and a permeability of at least 0,4 Darcy.

In another preferred embodiment a filter aid is provided wherein the volumic particle size distribution of the particles is defined by an average diameter of between 25 and 40 $\mu$m (Cilas measurement) and by the fact that 60% of the particles have a diameter between 15 and 50 $\mu$m.

In another preferred embodiment a filter aid is provided obtainable via a grinding step, preferably a cryogenic grinding step and a sieving step with a sieve having a mesh size from 50 to 90 $\mu$m.

The particles of the filter aid are submitted to a surface treatment in order to increase its <u>hydrophilicity</u>. Any kind of treatment can be used but preferably said surface treatment is an oxidating process wherein preferably a contacting step is present wherein the particles are brought into contact with a solution of KOCl and/or NaOCl (for example a 15% solution).

The filter aid according to the invention is in particular useful in candle filtration devices.

All these advantages will be elucidated hereunder wherein preferred embodiments and examples of the invention are explained.

In a preferred embodiment the invention is related to the use as a filter aid which is used as a precoat having a material of which the specific mass is less than the specific mass of the liquid or the suspension to be filtrated. More in particular the filter aid according to the invention is made of a material or is made of particles of a material whereby the flotation velocity of the particles is less than or equal to the filtration velocity.

The flotation velocity $U_{oA}$ can be measured as:

$$U_{oA} = \frac{d^2_A g}{18\mu} (\rho - \rho_A)$$

wherein $d_A$ is the diameter of the panicle, $\mu$ is the viscosity of the fluid, $\rho$ is the density of the fluid and $\rho_A$ is the density of the particle. This results in an annihilation of the sedimentation effects. In a most preferred embodiment HDPE is used which is a material useful in the feeding industry having a suitable resistance to the products used in beer filtration such as acids, alkali, detergents,...( and this up to a temperature of more than 100°C). The specific mass of this material is near to 940kg/m$^3$. The man skilled in the art could consider the use of a similar material, as mentioned above, having the characteristics that the solid phase of the filter cake would not recover the whole surface of the filtrating area and having the same flotation effect. The filtration velocity is kept constant, because the two relevant parameters, i.e. the flowrate and the filtration area are constant.

In a preferred embodiment the HDPE polymer is cryogenically ground and sieved over a sieve having a mesh size from 50 to 80 $\mu$m. The sieved fraction is used as a filter aid according to the invention. The granulometry (volumic particle size distribution) of these particles is measured via the granulometer laser Cilas in an alcoholic environment. Following results were obtained :

|  | Sieve 50 micron | Sieve 80 micron |
| --- | --- | --- |
| D 10 | 10.47 micron | 18.86 micron |
| D 50 | 34.19 micron | 52.50 micron |
| D 90 | 56.47 micron | 83.58 micron |

A microscopic analysis of 297 particles which would result of the cryogenic grinding process over a sieve of 80 microns resulted in :

| average area of the particles | 12.46 microns$^2$ | standard deviation: | 33.73 |
| --- | --- | --- | --- |
| average perimeter | 15.68 microns | standard deviation: | 16.05 |
| average maximum diameter | 4.33 microns | standard deviation: | 3.93 |
| average minimum diameter | 2.77 microns | standard deviation: | 2.66 |

This HDPE polymer is hydrophobic and has a natural tendency in forming in an aqueous environment. Furthermore, this situation could cause damage to essential pieces in the filter apparatuses and need therefore to be eliminated. In order to obtain a hydrophilic material it is a possibility to treat the surface of the particle of the filter aid with an oxidation step. Several HDPE materials have a resistance towards a solution of NaOCl/KOCl up to a temperature of 60°C. The ground material (200g) is put in suspension in one liter of natriumhypochloride 15%. The suspension is brought up to 91°C during 17h. The suspension is filtrated and the obtained filtrate is washed with demineralized water. This treatment renders the particles according to the invention even more suitable and more homogeneously divided over the total filtration surface of the candles.

Example 1

An experimental test is made with a filter aid according to the invention on a candle type Filtrox wherein the calibrated openings are from 50 to 70 $\mu$m. The diameter of the candle is 30.1 mm and the filtrating height is 38.6 cm. The candle is being placed in a filtration device under pressure having an inside diameter of 100 mm.

The filtration candle proper consists of eight longitudinal profiled elements on which is wound a radial profiled element with a precisely maintained gap between the windings. Any displacement of the radial profile is prevented by connections welded to the longitudinal elements. The radial gap is open towards the interior (angle about 20°). Because of this the particles remain fixed on the outside or migrate inwards as a result of the widening of the surface of the candle. Obstruction of the filtration candles by kieselguhr particles is thus prevented. The filtration candle has a very smooth surface which is resistant to impacts. This makes it easier for the sludge to slide off during the cleaning phase.

The inventors have prepared a suspension of 155 g of the filter aid of material HDPE, which is sieved with a 80 $\mu$m mesh and treated with NaOCl solution in 20 liter of water and this suspension is used for filtration having a flow rate of 0,6 liter per minute. Prior the filter is filled with water. When the deposition is ended the inventors have measured a pressure difference of 1600 Pascal. The turbidity measured from the preparation of the filtration device to the outflow of the suspension is 0.065 EBC, which is surprisingly a very small value. Afterwards the candle provided with filter aid is removed and the thickness of the cake measured from the top of the candle towards the end and resulted in :

| | |
|---|---|
| At the top of the candle | 7 mm |
| at 1 cm from the top | 6 mm |
| at 2 cm from the top | 6 mm |
| at 3 cm from the top | 6 mm |
| at 10 cm from the top | 8 mm |
| at 15 cm from the top | 8 mm |
| at 20 cm from the top | 8 mm |
| at 25 cm from the top | 7 mm |
| at 30 cm from the top | 7 mm |
| at 35 cm from the top | 7 mm |
| at 38,5 cm from the top | 7 mm |

The average thickness of the cake on the candle is 7.01 mm (standard deviation: 0,7 mm). The permeability of the cake is $1.066 \ 10^{-12} \ m^2$. These results prove the efficacity of the filter aid according to the invention.

Example 2

A similar example is performed using a traditional, known filter aid also known as Difbo® which is brought on the market via the firm CECA. The average thickness of the cake is 5 mm and for the deposition of 117g filter aid put in suspension in 22,5 liters water. At the top of the candle the inventors have noticed that some of the filtration surfaces is not being provided with the filter aid. At one cm of the top of the filtration zone the cake has only a thickness of 1 mm, on two centimeter 3 mm and on three centimeter of the top 3,7 mm. The turbidity when the container is empty is 9.1 EBC, the permeability is $0,7. \ 10^{-12}$m. These good results of a filter aid according to the invention indicate that only one precoat step is necessary in order to obtain excellent turbidity results, which is not the case with the known filter aids. The use of other filtration areas, for example in metal sheet (leaf, screen or plate) filters are also available. Experiments with a sieving operation on screen size 50 $\mu$m and experiments with a HDPE/PVPP mixture have led to similar results. A further quality of the filtration according to the invention is that hydrated PVPP ($1086 \ kg/m^3$) and the material of the filter aid can easily be separated via for example a decantation.

**Claims**

1. Filter aid for filtering beer, wherein said filter aid consists essentially of particles of a material A chosen from the groups: PE comprising: HDPE, LDPE, MDPE, LLDPE, polybutene; polymethylpentene; ethylene copolymers; binary copolymers and terpolymers with acrylics; olefinic thermoplastic elastomers, having a specific mass less than 1000 $kg/m^3$ and wherein the particles of the filter aid material have their hydrophilicity increased by having been submitted to a surface treatment.

2. Filter aid according to claim 1, wherein at least the outer surface of the particles has been oxidized to render it hydrophilic.

3. Filter aid according to claim 1 or 2, wherein the shape factor, measured with microscopic means, defined by the ratio between the smallest and the largest diameter sizes is on average between 0,4 and 0,8 and preferably close to 0,6.

4. Filter aid according to any of the previous claims 1 to 3, wherein the particles form a granular medium or cake having a porosity of between 0,4 and 0,6 and a permeability of at least 0,4 Darcy.

5. Filter aid according to any of the previous claims 1 to 4, wherein the volumic particle size distribution is defined by an average diameter of between 30 and 40 $\mu$m (Cilas measurement) and by the fact that 60 % of the particles have a diameter between 15 and 50 $\mu$m.

6. Filter aid according to any of the previous claims 1 to 5, further comprising PVPP.

7. Use of a filter aid according to any of claim 1 to 6, for filtering a liquid.

8. Use according to claim 7, wherein the flotation velocity of the filter aid is smaller than the filtration velocity.

9. Use according to claim 7 or 8, wherein the flotation velocity $U_{oA}$ is measured as

$$U_{oA} = \frac{d^2{}_A g}{18\mu}(\rho - \rho_a),$$

wherein $d_A$ is the diameter of the particle, $\mu$ is the viscosity of the fluid, $\rho$ is the density of the fluid and $\rho_a$ is the density of the particle.

10. Use according to any of claims 7 to 9, for filtering a liquid, such as beer, wherein the specific mass of the filter aid is less than or at least equal to the specific mass of the liquid.

11. Use according to any of previous claims 7 to 10, wherein the specific mass of the filter aid is less than the specific mass of the liquid.

12. Process for the production of a filter aid according to any of claims 1 to 6, wherein the filter aid is obtained via a grinding step, preferably a cryogenic grinding step and a sieving step with a sieve having a mesh from 50 to 90 $\mu$m.

13. Process according to claim 12, wherein at least the outer surfaces of the particles of filter aid have been oxidized.

14. Process according to claim 13, wherein the oxidation is obtained by reaction of putting said particles in a solution of KOCl and/or NaOCl.

15. Use of a filter aid according to any of the previous claims 1 to 6, as a precoating material in a candle filtration device.

16. Candle filtration device comprising a number of candles provided with a precoat consisting essentially of the filter aid according to any of the previous claims 1 to 6.

**Patentansprüche**

1. Filterhilfsmittel zum Filtern von Bier, wobei das Filterhilfsmittel im Wesentlichen aus Partikeln eines Materials A besteht, das aus folgenden Gruppen ausgewählt ist: PE umfassend: HDPE, LDPE, MDPE, LLDPE, Polybuten; Polymethylpenten; Ethylencopolymere; binäre Copolymere und Terpolymere mit Acrylharzderivaten; olefinische thermoplastische Elastomere mit einer spezifischen Masse von unter 1000 kg/m$^3$, und wobei die Hydrophilie der Partikel des Filterhilfsmaterials vergrößert wurde, indem sie einer Oberflächenbehandlung unterzogen wurden.

2. Filterhilfsmittel nach Anspruch 1, wobei zumindest die Außenoberfläche der Partikel oxidiert wurde, um sie hydrophil zu machen.

3. Filterhilfsmittel nach Anspruch 1 oder 2, wobei der Formfaktor, gemessen mit mikroskopischen Mitteln, der durch das Verhältnis zwischen den kleinsten und größten Durchmessergrößen bestimmt ist, im Mittel zwischen 0,4 und 0,8 liegt, und vorzugsweise nahe bei 0,6 liegt.

4. Filterhilfsmittel nach einem der vorhergehenden Ansprüche 1 bis 3, wobei die Partikel ein granulöses Medium oder einen granulösen Kuchen mit einer Porosität zwischen 0,4 und 0,6 und einer Permeabilität von mindestens 0,4 Darcy bilden.

5. Filterhilfsmittel nach einem der vorhergehenden Ansprüche 1 bis 4, wobei die volumetrische Partikelgrößenverteilung durch einen mittleren Durchmesser zwischen 30 und 40 $\mu$m (Cilas-Messung) und durch die Tatsache **gekennzeichnet** ist, dass 60% der Partikel einen Durchmesser zwischen 15 und 50 $\mu$m haben.

6. Filterhilfsmittel nach einem der vorhergehenden Ansprüche 1 bis 5, darüber hinaus PVPP umfassend.

7. Verwendung eines Filterhilfsmittels nach einem der Ansprüche 1 bis 6 zum Filtern einer Flüssigkeit.

8. Verwendung nach Anspruch 7, wobei die Flotationsgeschwindigkeit des Filterhilfsmittels niedriger ist als die Filtrationsgeschwindigkeit.

9. Verwendung nach Anspruch 7 oder 8, wobei sich die Flotationsgeschwindigkeit $U_{oA}$ berechnet zu

$$U_{oA} = \frac{d_A^2 g}{18\mu}(\rho - \rho_a),$$

worin $d_A$ der Partikeldurchmesser, $\mu$ die Viskosität des Fluids, $\rho$ die Dichte des Fluids und $\rho_a$ die Partikeldichte ist.

10. Verwendung nach einem der Ansprüche 7 bis 9 zum Filtern einer Flüssigkeit wie Bier, wobei die spezifische Masse des Filterhilfsmittels kleiner als oder zumindest gleich der spezifischen Masse der Flüssigkeit ist.

11. Verwendung nach einem der vorhergehenden Ansprüche 7 bis 10, wobei die spezifische Masse des Filterhilfsmittels kleiner als die spezifische Masse der Flüssigkeit ist.

12. Verfahren zur Herstellung eines Filterhilfsmittels nach einem der Ansprüche 1 bis 6, wobei das Filterhilfsmittel über einen Mahlschritt gewonnen wird, vorzugsweise einen kryogenen Mahlschritt, und einen Siebschritt mit einem Sieb mit einer Maschenweite von 50 bis 90 $\mu$m.

13. Verfahren nach Anspruch 12, wobei zumindest die Außenoberflächen der Partikel des Filterhilfsmittels oxidiert wurden.

14. Verfahren nach Anspruch 13, wobei die Oxidation durch eine Reaktion erhalten wird, wenn man die Partikel in eine Lösung aus KOCl und/oder NaOCl gibt.

15. Verwendung eines Filterhilfsmittels nach einem der vorhergehenden Ansprüche 1 bis 6 als Vorbeschichtungsmaterial in einer Kerzenfiltrationsvorrichtung.

**16.** Kerzenfiltrationsvorrichtung, die eine Anzahl von Kerzen umfasst, die mit einer Vorbeschichtung versehen sind, welche im Wesentlichen aus dem Filterhilfsmittel nach einem der vorhergehenden Ansprüche 1 bis 6 besteht.

**Revendications**

**1.** Adjuvant de filtrage pour filtrer la bière, dans lequel ledit adjuvant de filtrage consiste essentiellement en particules d'un matériau A choisi dans les groupes : PE comprenant : HDPE, LDPE, MDPE, LLDPE, polybutène ; polyméthylpentène ; copolymères d'éthylène ; copolymères binaires et terpolymères avec des acryliques ; élastomères thermoplastiques oléfiniques, ayant une masse spécifique inférieure à 1000 kg/m$^3$ et dans lequel les particules du matériau adjuvant de filtrage ont une hydrophilie augmentée en ayant été soumises à un traitement de surface.

**2.** Adjuvant de filtrage selon la revendication 1, dans lequel au moins la surface extérieure des particules a été oxydée pour la rendre hydrophile.

**3.** Adjuvant de filtrage selon la revendication 1 ou 2, dans lequel le facteur de forme, mesuré par des moyens microscopiques, défini par le rapport entre les tailles des diamètres le plus petit et le plus grand est en moyenne compris entre 0,4 et 0,8 et, de préférence, proche de 0,6.

**4.** Adjuvant de filtrage selon l'une quelconque des revendications 1 à 3 précédentes, dans lequel les particules forment un milieu granulaire ou un tourteau ayant une porosité comprise entre 0,4 et 0,6 et une perméabilité d'au moins 0,4 Darcy.

**5.** Adjuvant de filtrage selon l'une quelconque des revendications 1 à 4 précédentes, dans lequel la distribution des tailles de particules volumique est définie par un diamètre moyen compris entre 30 et 40 $\mu$m (mesure Cilas) et par le fait que 60 % des particules ont un diamètre compris entre 15 et 50 $\mu$m.

**6.** Adjuvant de filtrage selon l'une quelconque des revendications 1 à 5 précédentes comprenant, en outre, du PVPP.

**7.** Utilisation d'un adjuvant de filtrage selon l'une quelconque des revendications 1 à 6, pour filtrer un liquide.

**8.** Utilisation selon la revendication 7, dans laquelle la vitesse de flottation de l'adjuvant de filtrage est inférieure à la vitesse de filtration.

**9.** Utilisation selon la revendication 7 ou 8, dans laquelle la vitesse de flottation U$_{oA}$ est mesurée par

$$U_{oA} = \frac{d^2{}_A g}{18\mu}(\rho - \rho_a).$$

où d$_A$ est le diamètre de la particule, $\mu$ est la viscosité du fluide, $\rho$ est la densité du fluide et $\rho_a$ est la densité de la particule.

**10.** Utilisation selon l'une quelconque des revendications 7 à 9, pour filtrer un liquide, tel que la bière, dans laquelle la masse spécifique de l'adjuvant de filtrage est inférieure ou au moins égale à la masse spécifique du liquide.

**11.** Utilisation selon l'une quelconque des revendications 7 à 10 précédentes, dans laquelle la masse spécifique de l'adjuvant de filtrage est inférieure à la masse spécifique du liquide.

**12.** Procédé de production d'un adjuvant de filtrage selon l'une quelconque des revendications 1 à 6, dans lequel l'adjuvant de filtrage est obtenu par une étape de broyage, de préférence, une étape de broyage cryogénique et une étape de tamisage avec un tamis ayant une ouverture de maille de 50 à 90 $\mu$m.

**13.** Procédé selon la revendication 12, dans lequel au moins les surfaces extérieures des particules de l'adjuvant de filtrage ont été oxydées.

**14.** Procédé selon la revendication 13, dans lequel l'oxydation est obtenue par une réaction consistant à placer lesdites particules dans une solution de KOCl et/ou de NaOCl.

15. Utilisation d'un adjuvant de filtrage selon l'une quelconque des revendications 1 à 6 précédentes, à titre de matériau de précouche dans un dispositif de filtration de type bougie.

16. Dispositif de filtration de type bougie comprenant un certain nombre de bougies pourvues d'une précouche essentiellement constituée de l'adjuvant de filtrage selon l'une quelconque des revendications 1 à 6 précédentes.